# EUROPÄISCHE PATENTSCHRIFT

(11) **EP 0 825 503 B1**
(45) Veröffentlichungstag und Bekanntmachung des Hinweises auf die Patenterteilung: **04.12.2002**
(21) Anmeldenummer: 97113688.2
(22) Anmeldetag: 07.08.1997
(51) Int. Cl.: G05B 19/042

(54) **Schaltungsanordnung und Verfahren zur Verbindung eines elektrischen Hausgeräts mit einem Steuerungssystem**
Circuit and procedure for the connection of an electrical household appliance with a control system
Circuit et procédure de connexion d'un appareil domestique électrique muni d'un système de contrôle

(30) Priorität: 23.08.1996 DE 19634141
(43) Veröffentlichungstag der Anmeldung: 25.02.1998
(73) Patentinhaber: BSH Bosch und Siemens Hausgeräte GmbH, 81669 München (DE)
(72) Erfinder: Herrmann, Bernd-Peter, Dipl.-Ing., 10715 Berlin (DE); Hoch, Peter, Dipl.-Ing., 14169 Berlin (DE); Witt, Wolf-Dieter, Dipl.-Ing., Verstorben (DE); Ferstl, Peter, Dipl.-Phys., 93053 Regensburg (DE); Stangl, Erwin, Dipl.-Math., 92507 Nabburg (DE)

(56) Entgegenhaltungen:
- EP-A- 0 433 965
- EP-A- 0 434 986
- WO-A-94/15299
- WO-A-96/06386
- DE-A- 3 120 723
- DE-A- 3 624 139
- DE-A- 4 446 707

## Beschreibung

Die Erfindung betrifft eine Schaltungsanordnung und ein Verfahren zur Verbindung eines elektrischen Haushaltsgeräts mit einem Steuerungssystem nach dem Oberbegriff der Ansprüche 1 bzw. 13.

Aus der deutschen Patentanmeldung DE 44 46 962.4 ist eine Schaltungsanordnung zur Steuerung elektrischer Haushaltsgeräte bekannt, die untereinander, mit einem zentralen Rechner und/oder einer Anzeigeeinrichtung verbindbar sind, wobei den Haushaltsgeräten jeweils eine lokale Steuerung und jeweils ein Speicher zur Zwischenspeicherung von Daten zugeordnet sind. In der lokalen Steuerung eines Haushaltsgeräts ist dabei ein in der Weise ausgestaltetes Steuerungsprogramm zugeordnet, das aus Meß- und/oder Zustandsdaten des jeweiligen Haushaltsgeräts nach einer ersten Verarbeitungsvorschrift erste Zwischenwertdaten gebildet werden. In Abhängigkeit der ersten Zwischenwertdaten oder in Abhängigkeit extern gebildeter zweiter Zwischenwertdaten werden nach einer zweiten Verarbeitungsvorschrift Stellglieder des Haushaltsgeräts gesteuert.

Aus der DE-OS 31 20 723 ist ein Küchenblock mit elektronischer Steuereinrichtung bekannt. Dieser Küchenblock weist eine Halterung mit rasterartig angeordneten Halteelementen, Energieversorgungselementen und Steuerungselementen auf, an der rasterartig eine Mehrzahl von Küchenmodulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist. Die Steuereinrichtung ist über ein optoelektronisches Kommunikations-Interface mit einem Lichtleiter-Datenbus verbunden, der mit den Küchengeräte-Modulen in Wirkverbindung steht.

Aus der DE 36 24 139 A1 ist eine Schaltungsanordnung für die Betätigung eines Verbrauchers mittels eines Mikroprozessors bekannt. Bei dieser Schaltungsanordnung ist für die Betätigung und die Anzeige eines Verbrauchers durch den Mikroprozessor lediglich ein gemeinsamer Ein- und Ausgang bzw. eine gemeinsame Leitung für den Mikroprozessor erforderlich.

Aus der WO 96/06386 A1 ist eine Anordnung mit einer Signalverarbeitungsschaltung und einer Funktionseinheit bekannt. Die Anordung kann erkennen, ob eine Anschaltung in einem Steckplatz eines Automatisierungsgerätes gesteckt ist.

Aus der WO 94/15299 A1 ist eine Anordnung mit steckbaren Funktionseinheiten bekannt.

Steuerungssysteme zur Steuerung einer Mehrzahl von Geräten im häuslichen Bereich, sogenannte Home-Electronic-Systeme (HES), können in der Weise ausgestaltet sein, daß in einem derartigen System Schnittstellen vorgesehen sind, die einen Anschluß nur vorbestimmter Hausgeräte wie zum Beispiel Waschmaschinen eines bestimmten Herstellers ermöglichen.

Ausgehend von diesem Stand der Technik liegt der Erfindung die Aufgabe zugrunde, eine Schaltungsanordnung und ein Verfahren der eingangs genannten Art anzugeben, die einen Anschluß unterschiedlicher Hausgeräte an ein Steuerungssystem - ermöglichen.

Die Lösung dieser Aufgabe erfolgt durch eine Schaltungsanordnung und ein Verfahren, die in den Ansprüchen definiert sind.

Die erfindungsgemäße Schaltungsanordnung ermöglicht den Anschluß unterschiedlicher Hausgeräte sowie den Anschluß nicht festinstallierter Geräte (Geräte mit Steckeranschluß), ohne daß es erforderlich ist, manuell Befehle in das Steuerungssystem einzugeben, die eine Aktivierung bzw. Wirkintegration der Geräte im System initiieren. Die Geräte lassen sich in einfacher Weise und durch einen Nichtfachmann anschließen und aktivieren.

Die Erfindung wird nun anhand der Zeichnung beschrieben.

Es zeigen
- Fig. 1: die Zuordnung der erfindungsgemäßen Schaltungsanordnung zu einem Steuerungssystem und einem Hausgerät;
- Fig. 2: ein Ausführungsbeispiel einer erfindungsgemäßen Schaltungsanordnung und einer Schnittstellenschaltungsanordnung eines angeschlossenen Hausgeräts;
- Fig. 3: ein Ausführungsbeispiel von Daten, die zwischen der erfindungsgemäßen Schaltungsanordnung und einer Schnittstellenschaltungsanordnung eines angeschlossenen Hausgeräts übertragen werden; und
- Fig. 4 und Fig. 5: Ausführungsbeispiele der Steuerungsprogrammstruktur einer Steuerung der erfindungsgemäßen Schaltungsanordnung und einer Steuerung der Schnittstellenschaltungsanordnung eines angeschlossenen Hausgeräts.

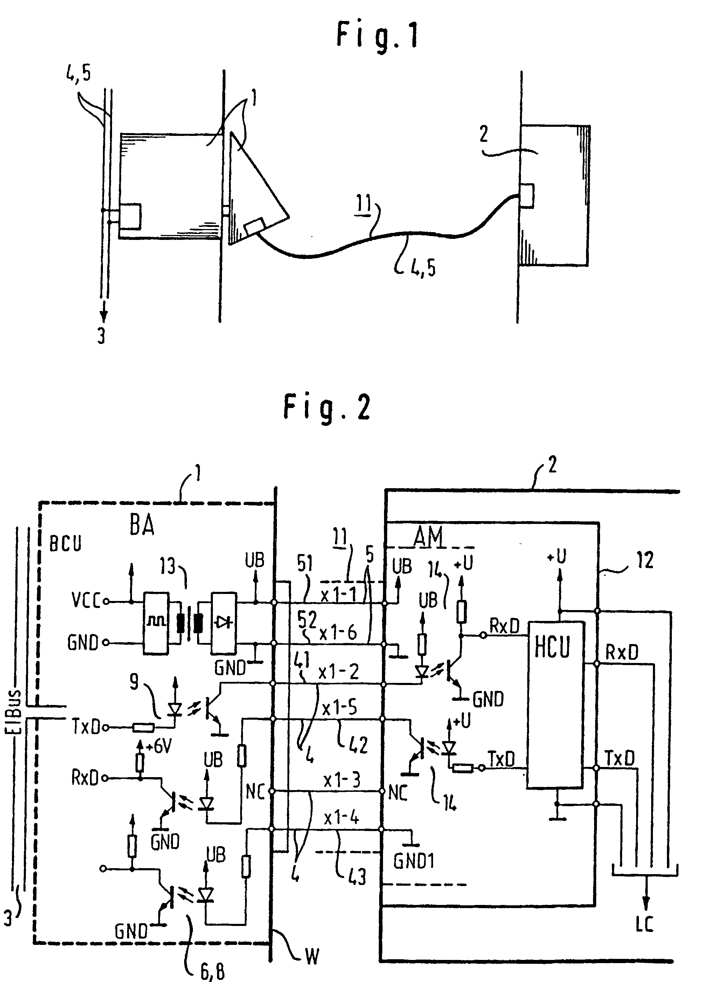

Die in Figur 1 schematisch dargestellte erfindungsgemäße Schaltungsanordnung 1 ist eine Schnittstellenschaltungsanordnung und dient zur Verbindung eines elektrischen Hausgeräts 2 bzw. einer Mehrzahl gleicher oder insbesondere unterschiedlicher Hausgeräte mit einem Steuerungsystem 3. Beispiele derartiger Hausgeräte sind eine Waschmaschine, eine Geschirrspülmaschine, eine Klimaanlage, ein Rolladen-Antriebsanlage, Beleuchtungseinrichtungen etc.

Das in Figur 1 schematisch dargestellte Hausgerät 2 ist mit dem Steuerungssystem 3 über eine Steuerdatenleitung 4 und eine Energieversorgungsleitung 5 verbunden. Zwischen Hausgerät 2 bzw. einer Hausgeräte-Schnittstellenschaltung 12 und der erfindungsgemäßen Schaltungsanordnung 1 sind Steuerdatenleitung 4 und Energieversorgungsleitung 5 z.B. als eine Anschlußleitung 11 ausgeführt, während zwischen der erfindungsgemäßen Schaltungsanordnung 1 und dem Steuerungssystem 3 die Steuerdatenleitung 4 und die Energieversorgungsleitung 5 z.B. als ein Installationsbus ("EIBus" in Fig. 2) ausgeführt sind.

Bei der Inbetriebnahme des Steuerungssystems 3 mit der erfindungsgemäßen Schaltungsanordnung 1 bzw. bei einem Anschluß eines Hausgeräts 2 werden das Steuerungssystem 3, die erfindungsgemäße Schaltungsanordnung 1 und das Hausgerät 2 parametriert, wobei das System, die erfindungsgemäße Schaltungsanordnung und das Hausgerät Informationen (Adressen und Zuordnungen) über das Gesamtsystem (= Steuerungssystem 3, Schnittstellenschaltungen 1 und Hausgerät 2 sowie eventuell weitere angeschlossene Hausgeräte) erhalten.

Wie noch beschrieben wird, ist es erfindungsgemäß möglich, ein Steuerungssystem mit mindestens einer universellen Schnittstellenschaltungsanordnung 1 bereits bei der Inbetriebnahme auszurüsten, ohne Kenntnis darüber zu haben, was für Hausgeräte 2 später in das System integriert werden. Werden später an die Schnittstellen-Schaltungsanordnungen 1 Hausgeräte 2 angeschlossen, so verhalten sich diese wie Steuerungssystem-Komponenten, die bereits bei der Inbetriebnahme in das Bussystem integriert wurden. Der Anschluß der Geräte 2 an die Schnittstellen-Schaltungsanordnungen und deren logische Integration kann ohne einen Fachmann vorgenommen werden.

Figur 2 zeigt ein Ausführungsbeispiel einer erfindungsgemäßen Schaltungsanordnung 1, die über einen Bus (EIBus) mit dem Steuerungssystem 3 verbunden ist; sie ist vorzugsweise als eine Steckdose (bzw. Stecker S wie z.B. Westemplug) ausgeführt und in einer Wand W installiert.

Die Schaltungsanordnung 1 ist über ein beispielsweise sechsadriges Anschlußkabel 11 mit dem Hausgerät 2 verbunden. Das Anschlußkabel 11 umfaßt die Energieversorgungsleitung 5 bzw. 51 ("x1-1") und 52 ("x1-6"), die Steuerdatenleitung 4 bzw. 41 ("x1-2"), 42 ("x1-5") und 43 ("x1-4"). Die Energieversorgungsleitung 5, 51, 52 dient der Energieversorgung der Schnittstellenschaltung 12 des Hausgeräts 2.

Die Anschlußkabelader 43 ("x1-4"; Erkennungsleitung) dient der Erkennung eines aktivierten (d.h. eingeschalteten) oder nicht aktivierten (d.h. nicht eingeschalteten) Hausgeräts. Eine Anschlußkabelader ("x1-3") ist bei dem in Figur 2 dargestellten Ausführungsbeispiel nicht belegt.

Das in Figur 2 dargestellte Ausführungsbeispiel einer erfindungsgemäßen Schaltungsanordnung 1 weist eine Steuerung BCU, die mit dem Bus ("EIBus") verbunden ist, und einen weiteren Schaltungsteil (Bus-Adapter "BA") auf, der zum einen mit der Steuerung BCU verbunden ist (Eingänge VCC, GND, TXD, RXD) und der zum anderen mit dem Anschlußkabel 11 verbindbar ist.

Das Bus-Adapter-Schaltungsteil BA weist ein erstes Schaltungselement 6 auf, das den Anschluß eines aktivierten oder nicht aktivierten Hausgeräts 2 an die Schaltungsanordnung 1 erkennt. Dieses erste Schaltungselement 6 ist über die Erkennungsleitung 43 ("x1-4") mit dem Massekontakt GND1 des angeschlossenen Hausgeräts 2 verbindbar. Damit wird der Anschluß des Hausgeräts 2 selbst dann erkannt, wenn das Gerät nicht aktiviert (abgeschaltet) ist. Insgesamt ermöglicht das erste Schaltungselement 6 die Erkennung von aktivierten (eingeschalteten) und nicht aktivierten (abgeschalteten) Hausgeräten.

Das erste Schaltungselement 6 ist z.B. als eine optisch-elektrische Umsetzereinrichtung 8 ausgebildet, die von der Anschlußkabelader 43, die als Lichtleiter ausgebildet ist, in optischer Form übertragene Steuerdaten optisch-elektrisch umsetzt.

Weiterhin weist das Bus-Adapter-Schaltungsteil BA weitere optisch-elektrische bzw. elektrisch-optische Umsetzereinrichtungen 9 auf, die von den Anschlußkabeladem 41 und 42, die als Lichtleiter ausgebildet sind, in optischer Form übertragene bzw. zu übertragende Steuerdaten optisch-elektrisch bzw. elektrisch-optisch umsetzen. Die Steuerdaten werden von dem Steuerungssystem 3 bzw. der Schaltungsanordnung 1 zum Hausgerät 2 über die Anschlußkabelader 41 ("x1-2") und von dem Hausgerät 2 zu der Schaltungsanordnung 1 bzw. zu dem Steuerungssystem 3 über die Anschlußkabelader 42 ("x15-6) übertragen.

Schließlich weist das Bus-Adapter-Schaltungsteil ein Schaltungsteil 13 auf, das zum einen die optisch-elektrischen Umsetzereinrichtungen 8, 9 im Bus-Adapter-Schaltungsteil und zum anderen über die Energieversorgungsleitung 51, 52 Schaltungskomponenten in der Schnittstellenschaltung 12 des Hausgeräts mit Energie versorgt.

Insgesamt ist bei dem in Figur 2 dargestellten Ausführungsbeispiel die Schaltungsanordnung 1 galvanisch von dem Hausgerät 2 getrennt.

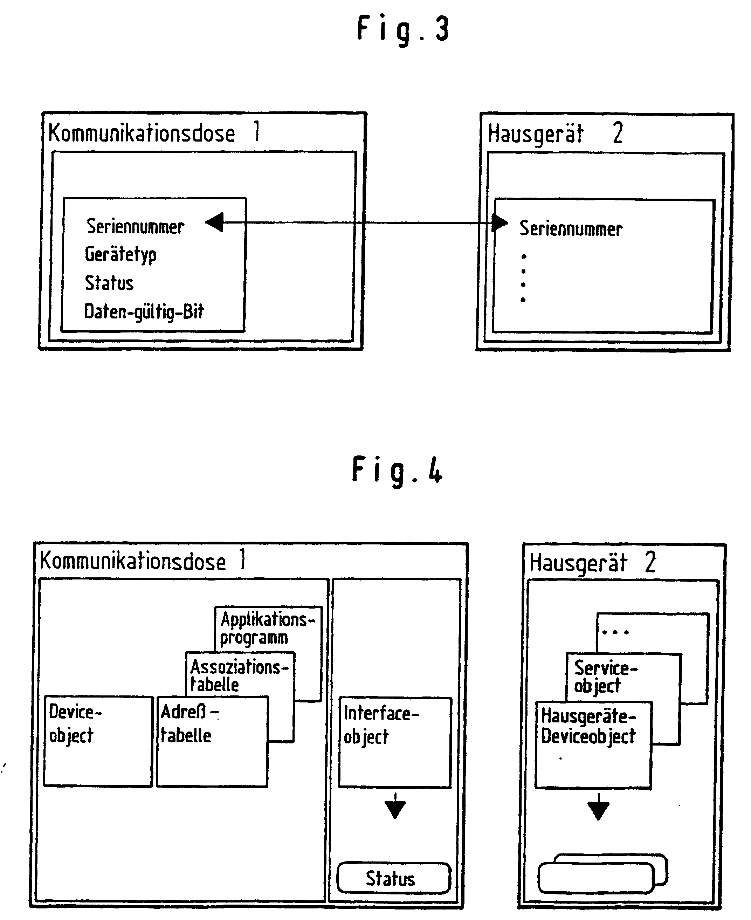

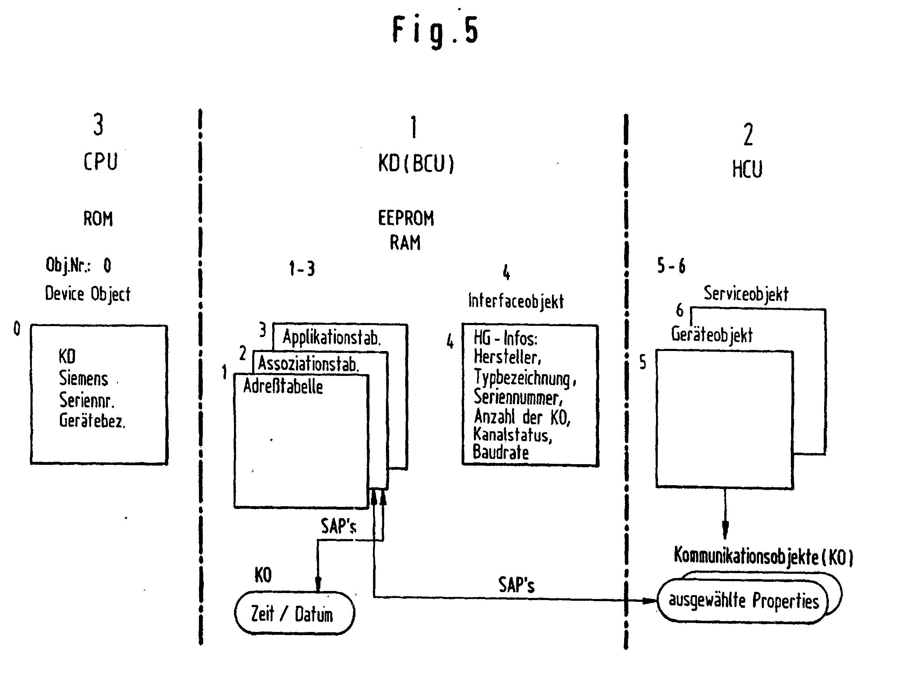

Die erfindungsgemäße Schaltungsanordnung 1 weist einen schematisch dargestellten Speicher 7 auf. In den Speicher 7 ist mindestens eine ein Hausgerät bezeichnende Information abspeicherbar, die ein Teil der Informationsmenge sein kann, die in den Figuren 4 und 5 als "Interfaceobject" bezeichnet ist. Insbesondere ist in dem Speicher 7 eine ein angeschlossenes Hausgerät 2 bezeichnende erste Information und zusätzlich eine ein zuvor angeschlossenes Hausgerät bezeichnende zweite Information abspeicherbar. In den Speicher 7 sind inbesondere auch Informationen abspeicherbar, die die schaltungstechnische Konfiguration der Schaltungsanordnung 1 bzw. deren Betriebszustand kennzeichnen und die in den Figuren 4 und 5 mit "Device Object" bezeichnet sind.

Es kann vorgesehen sein, daß eine dem Steuerungssystem zugeordnete Steuerung CPU (Figur 5) direkt auf den Speicher 7 zugreifen kann, so daß der Inhalt des Speichers 7 von dieser Steuerung CPU lesbar ist.

Weiterhin kann die erfindungsgemäße Schaltungsanordnung 1 eine Steuerung BCU aufweisen, der ein in der Weise ausgestaltetes Steuerungsprogramm zugeordnet ist, daß die das Hausgerät 2 bezeichnende Information, die von dem Hausgerät 2 über die Anschlußkabelader 42 zu der Schaltungsanordnung 1 übertragen wird, gelesen und in den Speicher 7 geschrieben wird.

Das der Steuerung BCU der erfindungsgemäßen Schaltungsanordnung 1 zugeordnete Steuerungsprogrmm ist insbesondere in der Weise ausgestaltet, daß die erste und zweite Information auf Identität geprüft werden. Diese Prüfung kann auch von der dem Steuerungssystem zugeordneten Steuerung CPU (Figur 5) durchgeführt werden. Damit kann festgestellt werden, ob ein neues Gerät 2 an die Schaltungsanordnung 1 angeschlossen wurde.

Z.B. wird zunächst eine Waschmaschine eines ersten Herstellers an die Schaltungsanordnung angeschlossen. Ausgelöst durch den Anschluß dieser Waschmaschine des ersten Herstellers wird eine erste Information gebildet. Anschließend wird diese Waschmaschine von der Schaltungsanordnung 1 abgetrennt und eine Waschmaschine eines zweiten Herstellers an die Schaltungsanordnung 1 angeschlossen. Ausgelöst durch den Anschluß dieser Waschmaschine des zweiten Herstellers wird eine zweite Information gebildet. Aufgrund unterschiedlicher Ausgestaltungen beider Waschmaschinen ist in diesem Beispiel die zweite Information ungleich der ersten Information.

Das der Steuerung BCU der Schaltungsanordnung 1 zugeordnete Steuerungsprogrmm kann weiterhin in der Weise ausgestaltet sein, daß eine ("dritte") Information, die den Anschluß eines Hausgeräts 2 an die Schaltungsanordnung bezeichnet, gebildet und von der Schaltungsanordnung 1 an die dem Steuerungssystem 3 zugeordnete Steuerung CPU übertragen wird.

Die Steuerung BCU der Schaltungsanordnung 1 erkennt auch, daß ein angeschlossenens Hausgerät 2 eingeschaltet wird (Spannungsschalter des Hausgeräts "EIN") oder eingeschaltet ist (Anschluß des bereits eingeschalteten Hausgeräts an die Schaltungsanordnung 1). Diese Erkennung erfolgt durch periodisch von der Steuerung BCU an das Hausgerät 2 ausgesendete Anfragen. Sobald das Hausgerät 2 an die Schaltungsanordnung angeschlossen ist und damit die Hausgerätesteuerung (HCU) über die Energieversorgungsleitung 51,52 mit Energie versorgt wird, quittiert die Hausgerätesteuerung die gerade eingehende Anfrage der Schaltungsanordnung 1.

In diesem Zusammenhang kann das der Steuerung BCU der Schaltungsanordnung 1 zugeordnete Steuerungsprogramm in der Weise ausgestaltet sein, daß eine ("vierte") Information, die die Aktivierung eines Hausgeräts 2 (Zufuhr einer Versorgungsspannung an das Hausgerät 2) bezeichnet, gebildet und von der Schaltungsanordnung 1 an die dem Steuerungssystem 3 zugeordnete Steuerung CPU übertragen wird.

Weiterhin fragt die Steuerung BCU der Schaltungsanordnung 1 Daten des Hausgeräts 2 ab, nachdem sie erkannt hat, daß das Hausgerät 2 aktiviert ist. Die Übertragung dieser Daten kann grundsätzlich mit verschiedenen Übertragungsgeschwindigkeiten erfolgen. Dabei kann vorgesehen sein, daß eine mögliche bzw. optimale Übertragungsgeschwindigkeit der Strecke Hausgerät 2 - Schaltungsanordnung 1 vor der eigentlichen Übertragung ermittelt wird.

Im Rahmen dieser Datenübertragung vom Hausgerät 2 zur Schaltungsanordnung 1 wird eine Kennummer ("erste, das Hausgerät 2 bezeichnende Information"; Hausgeräte-Deviceobjekt in Figuren 3 bis 5) des Hausgeräts 2 in den Speicher 7 eingelesen wird. Diese Kennummer ist insbesondere derart gestaltet, daß sie möglichst weltweit eindeutig ist.

Insbesondere ist das der Steuerung BCU der Schaltungsanordnung 1 zugeordnete Steuerungsprogramm in der Weise ausgestaltet, daß nur für den Fall, daß die erste Information (Kennumer eines zu einem ersten Zeitpunkt angeschlossene Hausgeräts) nicht identisch mit der zweiten Information (Kennumer eines zu einem zweiten Zeitpunkt angeschlossenen Hausgeräts) ist, eine weitere Information gebildet wird, die den Anschluß des durch die erste Information gekennzeichneten Hausgeräts 2 an die Schaltungsanordnung 1 bezeichnet, und daß die weitere Information von der Schaltungsanordnung 1 an die dem Steuerungssystem 3 zugeordnete Steuerung CPU übertragen wird. Auf diese Weise wird die Anzahl der Übertragungsprozeduren zwischen Schaltungsanordnung 1 und Steuerungssystem 3 minimiert. Die Steuerdatenleitung 4 zwischen Schaltungsanordnung 1 und Steuerungssystem wird somit für sonstige Datenübertragungen freigehalten. Mit der Übertragung der ersten Information an das Steuerungssystem 1 hat dieses Kenntnis, daß an der Schaltungsanordnung das entsprechende, durch die erste Information bezeichnete Hausgerät angeschlossen ist, so daß dieses Hausgerät in die Steuerungsprozeduren des Steuerungssystems miteinbezogen werden kann.

Das in Figur 2 dargestellte Ausführungsbeispiel eines Hausgeräts 2, das an die erfindungsgemäße Schaltungsanordnung anschließbar ist, weist ein Schnittstellenmodul 12 auf, das aus einem Anschlußmodul AM und einer Steuerung HCU besteht. Die Steuerung HCU ist mit einer lokalen Steuerung LC des Hausgeräts 2, welche den Nutzbetrieb (z.B. Waschbetrieb einer Waschmaschine) steuert, und dem Anschlußmodul AM verbunden. Das Modul AM ist zum einen mit der Steuerung HCU verbunden (Eingänge RxD, TxD) und ist zum anderen mit dem Anschlußkabel 51, 52, 41, 42, 43 verbindbar. Die Kabeladern 41 und 42 der Steuerdatenleitung führen in dem Schnittstellenmodul 12 auf optisch-elektrische bzw. elektrisch-optische Umsetzereinrichtungen 14, die in optischer Form übertragene bzw. zu übertragende Steuerdaten optisch-elektrisch bzw. elektrisch-optisch umsetzen und beispielsweise wie die Umsetzereinrichtungen 9 aufgebaut sind. Wie schon beschrieben, werden die Steuerdaten werden von dem Steuerungssystem 3 bzw. der Schaltungsanordnung 1 zum Hausgerät 2 über die Anschlußkabelader 41 ("x1-2") und von dem Hausgerät 2 zu der Schaltungsanordnung 1 bzw. zu dem Steuerungssystem 3 über die Anschlußkabelader 42 ("x15-6") übertragen.

Das Hausgerät 2 weist weiterhin einen in Figur 2 schematisch dargestellten Speicher 10 auf, in den mindestens eine das Hausgerät 2 bezeichnende Information abspeicherbar ist.

In das Steuerungssystem bzw. in ein Datenlesegerät (Personal Computer, "Home Assistant") des Steuerungssystems 3 kann ein Datenträger eingeführt werden. Der Datenträger, auf welchem zumindest eine das Hausgerät bezeichnende Information abgespeichert ist, wird von dem Datenlesegerät gelesen und z.B. mittels eines in das Steuerungssystems manuell eingebbaren Befehls wird das Hausgerät, das durch die auf dem Datenträger abgespeicherte Information spezifiziert ist, in das System integriert. Es kann vorgesehen sein, daß auf dem Datenträger ein Befehl abgespeichert ist, der den sonst manuell eingebbaren Befehl ersetzt. Der Datenträger kann z.B. zusammen mit dem Hausgerät verkauft werden. Auf dem Datenträger sind z.B. Daten abgespeichert, die die Schaltungsanordnung 1 ("Kommunikationsdose KD"), den Hersteller des Hausgeräts ("Siemens"), die Seriennummer und/oder die Geräteart (z.B. Waschgerät) oder verfügbare Programme zum Betrieb des Geräts (siehe auch Figur 5, linker Teil: "KD, Siemens, Seriennr. Gerätebez.") bezeichnen.

Das Steuerungssystem 3 bzw. die Steuerung CPU fragt nach Eingabe des vorgenannten Befehls vorhandene Schnittstellen-Schaltungsanordnungen 1 danach ab, an welche ein neues Hausgerät angeschlossen wurde: Dies geschieht mit der entsprechenden Gerätekennummer ("erste Information"), die ebenfalls auf dem Datenträger abgelegt ist. Mit Hilfe dieser gerätespezifischen Information auf dem Datenträger werden vom Steuerungssystem selbsttätig alle für den Betrieb des Gesamtsystems benötigten Daten in die Systemkomponenten (insbesondere in die Speicher 7 der Schnittstellen-Schaltungsanordnungen 1) geladen.

Das der Steuerung CPU des Steuerungssystems 3 zugeordnete Programm kann beispielsweise in der Weise ausgestaltet sein, daß bestimmte Störungen des angeschlossenen Hausgeräts an eine externe Stelle (Kundendienst) gemeldet und/oder auf einer internen optischen Anzeigeeinrichtung (z.B. Fernsehgerät) angezeigt werden. Ebenso läßt sich der Abschluß eines vorgebbaren Gerätebetriebs (z.B. Abschluß eines Waschvorgangs) auf einer internen Anzeigeeinrichtung anzeigen.

Im Rahmen des erfindungsgemäßen Verfahren zur Verbindung eines elektrischen Hausgeräts 2 mit einem Steuerungsystem 3 wird, wie schon beschrieben, der Anschluß eines aktivierten oder nicht aktivierten Hausgeräts 2 in einer Schaltungsanordnung 1 an einer Schnittstelle zwischen Steuerungssystem 3 und Hausgerät 2, welche die wie die in den Figuren beschriebene Schaltungsanordnung ausgestaltet sein kann, erkannt und eine den Anschluß des Hausgeräts 2 an die Schaltungsanordnung 1 bezeichnende ("dritte") Information und eine die Aktivierung des Hausgeräts 2 bezeichnende ("vierte") Information werden an das Steuerungssystem 3 übertragen.

In diesem Zusammenhang wird eine das angeschlossene Hausgerät 2 bezeichnende Information in einen Speicher 7 der Schaltungsanordnung 1 abspeichert. Diese Information wird von dem Hausgerät 2 zu der Schaltungsanordnung 1 übertragen. Es kann auch vorgesehen sein, daß diese Information, nachdem der Datenträger in ein Datenlesegerät des Steuerungssystem eingeführt ist, von dem Steuerungssystem 3 zu der Schaltungsanordnung 1 übertragen wird.

Insbesondere werden eine in dem Speicher 7 der Schaltungsanordnung 1 abgespeicherte, ein angeschlossenes Hausgerät 2 bezeichnende erste Information und ein zuvor angeschlossenes Hausgerät bezeichnende zweite Information auf Identität geprüft.

Vorzugsweise wird nur für den Fall, daß die erste Information nicht identisch mit der zweiten Information ist, eine weitere Information gebildet, die den Anschluß des durch die zweite Information gekennzeichneten Hausgeräts an die Schaltungsanordnung bezeichnet. Diese weitere Information wird von der Schaltungsanordnung 1 an eine dem Steuerungssystem 3 zugeordnete Steuerung CPU (Figur 5) übertragen.

Die Erfindung beruht unter anderem darauf, daß die Ankopplung des Busses ("EIBus") nicht Bestandteil des Hausgeräts 2 ist, sondern als universelle Schnittstelle (Schaltungsanordnung 1) für mobile Hausgeräte Bestandteil des Steuerungs- bzw. Bus-Systems ist. Die Schaltungsanordnung 1, die in Form einer Steckdose ausgebildet sein kann, befindet sich z.B. in der Wand (W, Figur 2) und wird üblicherweise mit der Inbetriebnahme des Systems ebenfalls in Betrieb genommen.

Nach der Inbetriebnahme ist die erfindungsgemäße Schaltungsanordnung 1 bereit zum Anschluß unterschiedlicher Geräte (z.B. Waschmaschine oder Geschirrspüler).

In den Figuren 3 bis 5 ist die Struktur der Steuerungssoftware schematisch dargestellt. Für den Austausch von Informationen über den Steuerbus EIBus (Figur 2) und für die Funktion des Steuerungssystems 3 ist erfindungsgemäß vorgesehen, daß die Informationen über die angeschlossenen Geräte 2 und die jeweils damit verbundenen Schaltungsanordnungen 1 ("Kommunikationsdosen KD" in Figuren 3 bis 5) in den Schaltungsanordnungen 1 bzw. im Steuerungssystem 3 verfügbar sind. Das heißt, wenn ein angeschlosssenes Hausgerät, z.B. ein Personal Computer, eine Information im Steuerungs- bzw. Bus-System versenden will, ist festgelegt, ob das jeweilige Zielgerät vorhanden und kommunikationsfähig ist und an welcher Schaltungsanordnung 1 ("Kommunikationsdose") es angeschlossen ist. Diese Informationen, die das Vorhandensein bzw. die Kommunikationsfähigkeit von Zielgeräten bezeichnen, stehen jedoch bei der Inbetriebnahme und Parametrierung des Steuerungssystems noch nicht zur Verfügung, da zu diesem Zeitpunkt noch nicht bekannt ist, ob und welche Hausgeräte später an welche Kommunikationsdose angeschlossen werden.

Die erfindungsgemäße Schaltungsanordnung und das erfindungsgemäße Verfahren ermöglichen es, wie dies vorstehend beschrieben wurde, nach der Inbetriebnahme des Steuerungs- bzw. Bussystems Hausgeräte anzuschalten, ohne daß hierzu ein Fachmann erforderlich ist.

Ein der Hausgerätesteuerung HCU und der Steuerung BCU zugeordnetes Steuerungsprogramm ist in der Weise ausgestaltet, daß Steuerdaten zumindest zwischen Hausgerät und Schaltungsanordnung adreßneutral übertragen werden. Damit verfügt das Hausgerät 2 bzw. die Steuerung HCU des Hausgerätes 2 über keine Adresse von Einrichtungen des Gesamtsystems, in das das Hausgerät später integriert wird. Die Datenübertragung für die Schnittstelle des Hausgerätes 2 ist adreßneutral gestaltet.

In diesem Zusammenhang ist eine adreßneutrale Datenstruktur auf der Basis von Objekten vorgesehen (Figuren 3 bis 5), wobei ein Teil der Objekte in der Schaltungsanordnung 1 (Speicher 7) und andere Objekte im Hausgerät 2 (Speicher 10) gespeichert werden (Fig. 4). Die Schaltungsanordnung 1 nimmt an sie adressierte Daten auf und überträgt diese adreßneutral an das Hausgerät 2 auf der Basis sogenannter Objekte weiter. In gleicher Weise wird die Datenübertragung in umgekehrter Richtung vom Hausgerät 2 zu anderen Komponenten im Gesamtsystem durchgeführt. Für Daten, die vom Hausgerät 2 (bzw. "HG" in Figuren 4 und 5) aus übertragen werden, ist in der Steuerungssoftware für das jeweilige Objekt eine allgemeine Nummer (Service Access Point SAP, Figur 5) festgelegt. Mit Hilfe dieser Nummer und einer für jedes Steuerungssystem 3 spezifischen Assoziationstabelle (Figur 5) in der Schaltungsanordnung 1 wird die Information aus dem Hausgerät 2 dann mit einer Adresse aus dem konkreten Steuerungssystem versehen und über den Steuerbus EIBus (Figur 2) übertragen.

Die in diesem Zusammenhang verwendeten Softwareelemente sind in Figur 4 (linker Teil) und in Figur 5 mit "1", "2" und "3" bezeichnet. Diese Softwareelemente sind "Applikationsprogramm" bzw. "-tabelle", "Assoziationstabelle", und "Adreßtabelle".

## Patentansprüche

1. Schaltungsanordnung (1) zur Verbindung eines elektrischen Hausgeräts (2) mit einem Steuerungsystem (3), wobei die Schaltungsanordnung (1) das Hausgerät (2) mit dem Steuerungssystem (3) über eine Steuerdatenleitung (4) und eine Energieversorgungsleitung (5) verbindet,
**dadurch gekennzeichnet,**
**daß** die Schaltungsanordnung (1) ein erstes Schaltungselement (6) aufweist, das das Vorhandensein einer elektrischen Verbindung eines aktivierten oder nicht aktivierten Hausgeräts (2) mit der Schaltungsanordnung erkennt, daß die Schaltungsanordnung (1) einen Speicher (7) aufweist, in den mindestens eine ein Hausgerät (2) bezeichnende Information abspeicherbar ist, und daß die Schaltungsanordnung (1) eine Steuerung (BCU) aufweist, der ein in der Weise ausgestaltetes Steuerungsprogramm zugeordnet ist, daß die das Hausgerät (2) bezeichnende Information von dem Hausgerät (2) zu der Schaltungsanordnung (1) übertragen, gelesen und in den Speicher (7) geschrieben wird.

2. Schaltungsanordnung nach Anspruch 1, **dadurch gekennzeichnet, daß** das angeschlossene Hausgerät (2) einen Massekontakt (GND1) aufweist, und daß erste Schaltungselement (6) mit dem Massekontakt (GND1) des angeschlossenen Hausgeräts (2) verbindbar ist.

3. Schaltungsanordnung nach Anspruch 1 oder 2, **dadurch gekennzeichnet, daß** in den Speicher (7) eine erste Information, die ein an die Schaltungsanordnung (1) angeschlossenes Hausgerät (2) bezeichnet, und eine zweite Information, die ein zuvor an die Schaltungsanordnung (1) angeschlossenes Hausgerät bezeichnet, abgespeicherbar ist, und daß das der Steuerung (BCU) der Schaltungsanordnung zugeordnete Steuerungsprogramm in der Weise ausgestaltet ist, daß die erste und zweite Information auf Identität geprüft werden.

4. Schaltungsanordnung nach einem der Ansprüche 1 bis 3, **dadurch gekennzeichnet, daß** der Speicher von einer dem Steuerungssystem (3) zugeordneten Steuerung (CPU) lesbar ist.

5. Schaltungsanordnung nach einem der Ansprüche 1 bis 4, **dadurch gekennzeichnet, daß** das der Steuerung (BCU) zugeordnete Steuerungsprogramm in der Weise ausgestaltet ist, daß eine dritte Information, die den Anschluß eines Hausgeräts (2) an die Schaltungsanordnung (1) bezeichnet, gebildet und von der Schaltungsanordnung (1) an eine dem Steuerungssystem (3) zugeordnete Steuerung (CPU) übertragen wird.

6. Schaltungsanordnung nach einem der Ansprüche 1 bis 5, **dadurch gekennzeichnet, daß** das der Steuerung (BCU) zugeordnete Steuerungsprogramm in der Weise ausgestaltet ist, daß eine vierte Information, die die Zufuhr einer Versorgungsspannung an ein Hausgerät (2) bezeichnet, gebildet und von der Schaltungsanordnung (1) an eine dem Steuerungssystem (3) zugeordnete Steuerung (CPU) übertragen wird.

7. Schaltungsanordnung nach einem der Ansprüche 3 bis 6, **dadurch gekennzeichnet, daß** das der Steuerung (BCU) der Schaltungsanordnung (1) zugeordnete Steuerungsprogramm in der Weise ausgestaltet ist, daß nur für den Fall, daß die erste Information nicht identisch mit der zweiten Information ist, eine weitere Information gebildet wird, die den Anschluß des durch die erste Information **gekennzeichneten** Hausgeräts an die Schaltungsanordnung (1) bezeichnet, und daß die weitere Information von der Schaltungsanordnung (1) an eine dem Steuerungssystem (3) zugeordnete Steuerung (CPU) übertragen wird.

8. Schaltungsanordnung nach einem der vorstehenden Ansprüche, **dadurch gekennzeichnet, daß** die Schaltungsanordnung (1) mindestens eine erste optisch-elektrische Umsetzereinrichtung (9) aufweist, die von einer Lichtleiter- Steuerdatenteitung in optischer Form übertragene Steuerdaten optisch-elektrisch umsetzt.

9. Schaltungsanordnung nach einem der vorstehenden Ansprüche, **dadurch gekennzeichnet, daß** das erste Schaltungselement eine zweite optisch-elektrische Umsetzereinrichtung (8) umfaßt.

10. Schaltungsanordnung nach einem der vorstehenden Ansprüche, **dadurch gekennzeichnet, daß**,der Steuerung (BCU) der Schaltungsanordnung (1) und einer Steuerung (HCU) des Hausgeräts ein in der Weise ausgestaltetes Steuerungsprogramm zugeordnet ist, daß die Übertragung von Steuerdaten zumindest zwischen Hausgerät (2) und Schaltungsanordnung (1) adreßneutral erfolgt.

11. Hausgerät (2) für den Anschluß an eine Schaltungsanordnung (1) nach einem der vorstehenden Ansprüche, **dadurch gekennzeichnet, daß** das Hausgerät (2) einen Speicher (10) aufweist, in dem eine das Hausgerät (2) bezeichnende Information abspeicherbar ist.

12. Datenträger mit einer das Hausgerät (2) nach Anspruch 11 bezeichnenden Information.

13. Verfahren zur Verbindung eines elektrischen Hausgeräts (2) mit einem Steuerungsystem (3), wobei eine Schaltungsanordung (1) an einer Schnittstelle zwischen Steuerungssystem (3) und Hausgerät (2) so geschaltet ist, daß das Hausgerät (2) mit dem Steuerungssystem (3) über eine Steuerdatenleitung (4) und eine Energieversorgungsleitung (5) verbindbar ist,
**dadurch gekennzeichnet,**
**daß** der Anschluß eines aktivierten oder nicht aktivierten Hausgeräts (2) an die Schaltungsanordnung (1) erkannt wird, daß eine den Anschluß des Hausgeräts (2) bezeichnende Information an das Steuerungssystem (3) übertragen wird und daß eine das angeschlossene Hausgerät (2) bezeichnende Information in einen Speicher (7) der Schaltungsanordnung (1) abspeichert wird.

14. Verfahren nach Anspruch 13, **dadurch gekennzeichnet, daß** eine information, die die Zufuhr einer Versorgungsspannung an das Hausgerät (2) bezeichnet, gebildet und an das Steuerungssystem (3) übertragen wird.

15. Verfahren nach Anspruch 13, **dadurch gekennzeichnet, daß** eine in dem Speicher (7) der Schaltungsanordnung (1) abgespeicherte, ein angeschlossenes Hausgerät (2) bezeichnende erste Information und ein zuvor angeschlossenes Hausgerät bezeichnende zweite Information auf Identität geprüft werden.

16. Verfahren nach Anspruch 15, **dadurch gekennzeichnet, daß** nur für den Fall, daß die erste Information nicht identisch mit der zweiten Information ist, eine weitere Information gebildet wird, die den Anschluß des durch die zweite Information **gekennzeichneten** Hausgeräts (2) an die Schaltungsanordnung (1) bezeichnet, und daß die weitere Information von der Schaltungsanordnung (1) an eine dem Steuerungssystem (3) zugeordnete Steuerung (CPU) übertragen wird.

## Claims

1. Circuit arrangement (1) for connection of a domestic electrical appliance (2) with a control system (3), wherein the circuit arrangement (1) connects the domestic appliance (2) with the control system (3) by way of control data line (4) and an energy supply line (5), **characterised in that** the circuit arrangement (1) comprises a first circuit element (6) which recognises the presence of an electrical connection of an activated or non-activated domestic appliance (2) with the circuit arrangement, that the circuit arrangement (1) comprises a memory (7) in which at least one item of information denoting a domestic appliance (2) can be stored, and that the circuit arrangement (1) comprises a control (BCU), associated with a control program designed in such a manner that the item of information denoting the domestic appliance (2) is transferred from the domestic appliance (2) to the circuit arrangement (1), read and written into the store (7).

2. Circuit arrangement according to claim 1, **characterised in that** the connected domestic appliance (2) has an earth contact (GND1) and that the first circuit element (6) is connectible with the earth contact (GND1) of the connected domestic appliance (2).

3. Circuit arrangement according to claim 1 or 2, **characterised in that** a first item of information which denotes a domestic appliance (2) connected to the circuit arrangement (1) and a second item of information which denotes a domestic appliance previously connected to the circuit arrangement (1) can be stored in the memory (7) and that the control program associated with the control (BCU) of the circuit arrangement is designed in such a manner that the first and second items of information are checked for identity.

4. Circuit arrangement according to one of claims 1 to 3, **characterised in that** the memory is readable by a control (CPU) associated with the control system (3).

5. Circuit arrangement according to one of claims 1 to 4, **characterised in that** the control program associated with the control (BCU) is designed in such a manner that a third item of information which denotes the connection of a domestic appliance (2) to the circuit arrangement (1) is formed and is transferred from the circuit arrangement (1) to a control (CPU) associated with the control system (3).

6. Circuit arrangement according to one of claims 1 to 5, **characterised in that** the control program associated with the control (BCU) is designed in such a manner that a fourth item of information which denotes the feed of a supply voltage to a domestic appliance (2) is formed and is transferred from the circuit arrangement (1) to a control (CPU) associated with the control system (3).

7. Circuit arrangement according to one of claims 3 to 6, **characterised in that** the control program associated with the control (BCU) of the circuit arrangement (1) is designed in such a manner that a further item of information, which denotes the connection to the circuit arrangement (1) of the domestic appliance **characterised by** the first item of information, is formed only for the case that the first item of information is not identical with the second item of information, and that the further item of information is transferred from the circuit arrangement (1) to a control (CPU) associated with the control system.

8. Circuit arrangement according to one of the preceding claims, **characterised in that** the circuit arrangement (1) comprises at least one first optoelectrical converting device (9) which optoelectrically converts control data transferred in optical form from an optical conductor control data line.

9. Circuit arrangement according to one of the preceding claims, **characterised in that** the first circuit element comprises a second optoelectrical converting device (8).

10. Circuit arrangement according to one of the preceding claims, **characterised in that** the control (BCU) of the circuit arrangement (1) and a control (HCU) of the domestic appliance are associated with a control program designed in such a manner that the transfer of control data at least between the domestic appliance (2) and the circuit arrangement (1) takes place in a manner which is neutral with respect to address.

11. Domestic appliance (2) for connection to a circuit arrangement (1) according to one of the preceding claims, **characterised in that** the domestic appliance (2) comprises a memory (10) in which an item of information denoting the domestic appliance (2) can be stored.

12. Data carrier with an item of information denoting the domestic appliance (2) according to claim 11.

13. Method of connecting a domestic electrical appliance (2) with a control system (3), wherein a circuit arrangement (1) is so connected to an interface between the control system (3) and the domestic appliance (2) that the domestic appliance (2) is connectible with the control system (3) by way of a control data line (4) and an energy supply line (5), **characterised in that** the connection of an activated or non-activated domestic appliance (2) to the circuit arrangement (1) is recognised, that an item of information denoting the connection of the domestic appliance (2) is transferred to the control system (3) and that an item of information denoting the connected domestic appliance (2) is stored in a memory (7) of the circuit arrangement (1).

14. Method according to claim 13, **characterised in that** an item of information which denotes the feed of a supply voltage to the domestic appliance (2) is formed and is transferred to the control system (3).

15. Method according to claim 13, **characterised in that** a first item of information stored in the memory (7) of the circuit arrangement (1) and denoting a connected domestic appliance (2) and a second item of information denoting a previously connected domestic appliance are checked for identity.

16. Method according to claim 15, **characterised in that** a further item of information, which denotes the connection to the circuit arrangement (1) of the domestic appliance (2) **characterised by** the second item of information, is formed only for the case that the first item of information is not identical with the second item of information, and that the further item of information is transferred from the circuit arrangement (1) to a control (CPU) associated with the control system (3).

## Revendications

1. Circuit (1) pour la connexion d'un appareil domestique électrique (2) muni d'un système de contrôle (3), le circuit (1) connectant l'appareil domestique (2) au système de contrôle (3) par l'intermédiaire d'une liaison de données de contrôle (4) et d'une ligne d'alimentation électrique (5), **caractérisé en ce que** le circuit (1) comprend un premier élément de circuit (6) qui reconnaît l'existence d'une connexion électrique au circuit d'un appareil domestique (2) activé ou non activé, **en ce que** le circuit (1) comprend une mémoire (7) dans laquelle on peut stocker au moins une information caractérisant un appareil domestique (2), et **en ce que** le circuit (1) comprend une commande (BCU) pour laquelle est attribué un programme de contrôle réalisé de sorte que l'information caractérisant l'appareil domestique (2) est transmise de l'appareil domestique (2) au circuit (1), puis lue et inscrite dans la mémoire (7).

2. Circuit selon la revendication 1, **caractérisé en ce que** l'appareil domestique (2) raccordé comprend un contact à la masse (GND1), et **en ce que** le premier élément du circuit (6) peut être connecté au contact à la masse (GND1) de l'appareil domestique (2) raccordé.

3. Circuit selon la revendication 1 ou 2, **caractérisé en ce qu**'une première information, caractérisant un appareil domestique (2) raccordé à un circuit (1), et une deuxième information, caractérisant un appareil domestique (2) raccordé précédemment au circuit (1), peuvent être mémorisées dans une mémoire (7), et **en ce que** la commande (BCU) du programme de contrôle attribué au circuit est réalisé de sorte que l'identité de la première et de la deuxième information est vérifiée.

4. Circuit selon l'une des revendications 1 à 3, **caractérisé en ce que** la mémoire peut être lue par une commande (CPU) attribué au système de contrôle (3).

5. Circuit selon l'une des revendications 1 à 4, **caractérisé en ce que** le programme de contrôle attribué à la commande (BCU) est réalisé de sorte qu'une troisième information, caractérisant la connexion d'un appareil domestique (2) au circuit (1), est formée et transmise par le circuit (1) à une commande (CPU) attribuée au système de contrôle (3).

6. Circuit selon l'une des revendications 1 à 5, **caractérisé en ce que** le programme de contrôle attribué à la commande (BCU) est réalisé de sorte qu'une quatrième information, caractérisant l'alimentation d'une tension d'alimentation à un appareil domestique (2), est formée et transmise par le circuit (1) à une commande (CPU) attribuée au système de contrôle (3).

7. Circuit selon l'une des revendications 3 à 6, **caractérisé en ce que** le programme de contrôle attribué à la commande (BCU) du circuit (1) est réalisé de sorte que, uniquement au cas où la première information n'est pas identique à la seconde information, une autre information est formée, caractérisant la connexion au circuit (1) de l'appareil domestique **caractérisé par** la première information, et **en ce que** l'autre information est transmise par le circuit (1) à une commande (CPU) attribuée au système de contrôle (3).

8. Circuit selon l'une des revendications précédentes, **caractérisé en ce que** le circuit (1) présente au moins un premier dispositif convertisseur optoélectrique (9) qui convertit les données de contrôle transmises sous forme optique par une liaison de contrôle des données à fibres optiques,

9. Circuit selon l'une des revendications précédentes, **caractérisé en ce que** le premier élément du circuit comprend un deuxième dispositif convertisseur optoélectrique (8).

10. Circuit selon l'une des revendications précédentes, **caractérisé en ce qu**'un programme de contrôle est attribué à la commande (BCU) du circuit (1) et à un contrôle (HCU) de l'appareil domestique, réalisé de sorte que la transmission en adressage neutre de données de contrôle a lieu au moins entre l'appareil domestique (2) et le circuit (1).

11. Appareil domestique (2) pour la connexion à un circuit (1) selon l'une des revendications précédentes, **caractérisé en ce que** l'appareil domestique (2) présente une mémoire 10 dans laquelle peut être stockée une information caractérisant l'appareil domestique (2).

12. Support de données avec une information caractérisant l'appareil domestique (2) selon la revendication 11.

13. Procédé pour la connexion d'un appareil domestique (2) électrique à un système de contrôle (3), un circuit (1) étant commuté à une interface entre le système de contrôle (3) et l'appareil domestique (2) de sorte que l'appareil domestique (2) peut être connecté au système de contrôle (3) par l'intermédiaire d'une liaison de données de contrôle (4) et d'une ligne d'alimentation électrique (5), **caractérisé en ce que** la connexion d'un appareil domestique (2) activé ou non activé au circuit est reconnue, **en ce qu'**une information caractérisant la connexion de l'appareil domestique (2) est transmise au système de contrôle (3) et **en ce qu**'une information caractérisant l'appareil domestique (2) connecté est mémorisée dans une mémoire (7) du circuit (1).

14. Procédé selon la revendication 13, **caractérisé en ce qu**'une information, caractérisant l'alimentation d'une tension d'alimentation à l'appareil domestique (2), est formée et transmise au système de contrôle (3).

15. Procédé selon la revendication 13, **caractérisé en ce que** l'identité d'une première information, stockée dans la mémoire (7) du circuit (1), caractérisant un appareil domestique (2) raccordé, et une deuxième information, caractérisant un appareil domestique raccordé précédemment, est vérifié.

16. Procédé selon la revendication 15, **caractérisé en ce que,** uniquement au cas où la première information n'est pas identique à la seconde information, une autre information est formée, caractérisant la connexion au circuit (1) de l'appareil domestique (2) **caractérisé par** la seconde information, et **en ce que** l'autre information est transmise par le circuit (1) à une commande (CPU) attribuée au système de contrôle (3).
